**Europäisches Patentamt**

**European Patent Office**

**Office européen des brevets**

(19)

(11) Numéro de publication : **0 390 621 B1**

(12) # FASCICULE DE BREVET EUROPEEN

(45) Date de publication du fascicule du brevet :
23.12.92 Bulletin 92/52

(51) Int. Cl.⁵ : **B60T 8/18**

(21) Numéro de dépôt : **90400476.9**

(22) Date de dépôt : **21.02.90**

(54) **Compensateur de freinage.**

(30) Priorité : **31.03.89 FR 8904331**

(43) Date de publication de la demande :
**03.10.90 Bulletin 90/40**

(45) Mention de la délivrance du brevet :
**23.12.92 Bulletin 92/52**

(84) Etats contractants désignés :
**DE ES FR GB IT**

(56) Documents cités :
**DE-A- 3 602 863**
**GB-A- 2 072 808**
**GB-A- 2 172 354**

(73) Titulaire : **BENDIX EUROPE Services
Techniques S.A.
126 rue de Stalingrad
F-93700 Drancy (FR)**

(72) Inventeur : **Kervagoret, Gilbert, Bendix Europe
Services Techniques, 126 rue de Stalingrad
F-93700 Drancy (FR)**

Jouve, 18, rue Saint-Denis, 75001 PARIS

## Description

La présente invention concerne les compensateurs de freinage utilisés dans les véhicules automobiles pour assurer une répartition de l'effort de freinage entre les essieux avant et arrière en fonction de la charge du véhicule ainsi équipé, c'est à dire en fonction de la hauteur de l'assiette du véhicule.

De tels compensateurs sont, par exemple, décrits dans EP-A-0 156 666 et FR-A-2 499 922. D'une façon générale, un tel compensateur de freinage asservi à la hauteur d'assiette d'un véhicule comportant une partie suspendue solidaire du chassis et une partie non-suspendue associée à un essieu, comprend une valve correctrice de la pression du liquide de frein comportant dans un boitier solidaire de l'une des deux parties précitées du véhicule, un clapet commandant le passage du liquide de frein sous l'action de la pression hydraulique régnant dans les deux circuits et pouvant être soumis d'autre part à l'effort provoqué par une tige faisant saillie du boitier, le clapet étant maintenu en position de repos au moyen d'un élément élastique précontraint, et un levier dont un premier bras s'étend entre un pivot solidaire de la même partie du véhicule que le boitier, et l'autre partie du véhicule, et dont un second bras s'étend entre le pivot et l'extrémité de la tige faisant saillie du boitier.

Un tel compensateur doit être pré-réglé avant d'être monté dans le véhicule à équiper, de manière à déterminer de façon répétitive le point de fonctionnement du clapet indépendamment des dispersions des caractéristiques des moyens élastiques utilisés. Or puisque le pivot est solidaire du boitier, un tel pré-réglage détermine une modification de la position au repos du levier dont il peut résulter un ballotement indésirable de certaines pièces et des bruits désagréables lorsque la charge instantanée du véhicule est inférieure ou égale à la charge à vide de ce dernier.

On connaît du document GB-A-2 172 354 un compensateur de freinage dans lequel les clapets des valves correctrices sont commandés par des tiges faisant saillie du boitier, elles-mêmes commandées par un levier par l'intermédiaire d'un ressort en appui sur un palonnier en appui sur les tiges, le levier portant un ensemble vis-écrou de manière à ménager au repos un jeu entre la tête de la vis et le palonnier. Un tel montage a pour but de permettre une tolérance assez large des conditions de montage sans altérer le fonctionnement du compensateur.

On connaît également du document GB-A-2 072 808 un compensateur de freinage dans lequel le pivot autour duquel tourne le levier de commande de la valve est formé sur une entretoise de longueur réglable.

Ces deux derniers documents présentent les mêmes inconvénients que ceux qui ont été rappelés plus haut, à savoir un éventuel ballotement du levier lorsque la charge instantannée du véhicule est inférieur ou égale à la charge à vide de ce dernier.

La présente invention obvie à ces inconvénients. Selon l'invention, le compensateur comporte des moyens pour régler séparément au repos d'une part la précontrainte exercée sur le moyen élastique et, d'autre part, la hauteur de l'extrémité du premier bras reliée à l'autre partie du véhicule, par rapport à celle du boitier pour une hauteur déterminée de l'assiette du véhicule, ces moyens étant constitués, d'une part, par un écrou équipant la tige permettant de modifier la longueur utile de celle-ci, et d'autre part, par une entretoise solidaire de la même partie du véhicule que le boitier, dont la longueur est réglable, interdisant toute modification de la hauteur de cette extrémité pour une hauteur d'assiette du véhicule supérieure à la hauteur déterminée.

Selon un mode de réalisation de l'invention, cette entretoise est constituée par un ensemble vis-écrou dont la vis traverse un des bras du levier et l'écrou interdit tout mouvement du levier pour une hauteur d'assiette du véhicule supérieure à la hauteur déterminée.

L'invention sera mieux comprises et d'autres buts, avantages et caractéristiques de celle-ci apparaîtront plus clairement à la lecture de la description qui suit d'un mode de réalisation donné à-titre non limitatif et à laquelle une planche de dessin est jointe sur laquelle :

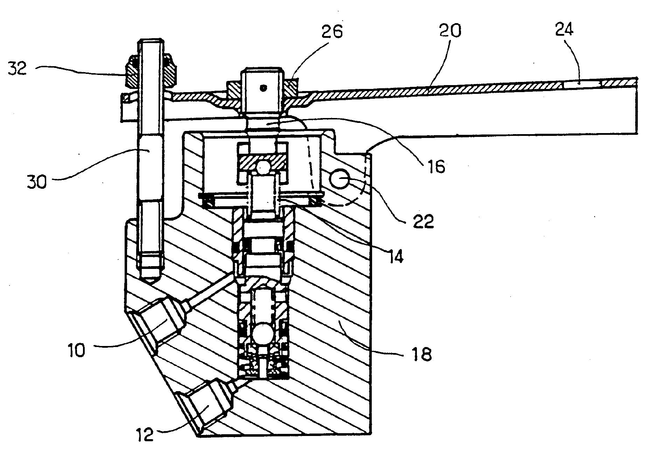

- la Figure unique représente schématiquement un compensateur conforme à la présente invention.

En référence maintenant à cette Figure, on reconnaît un compensateur constitué par une valve correctrice comprenant un clapet commandant le passage du liquide de frein entre les conduits 10, 12, maintenu en position de repos par un ressort précontraint 14. Le clapet peut être actionné par une tige 16 faisant saillie du boitier 18. Le levier 20 comporte un pivot 22 et deux bras. Un premier bras s'étend entre le pivot 22 et l'extrémité 24 qui est reliée à la partie du véhicule qui n'est pas solidaire du boitier 18. Un second bras s'étend entre le pivot 22 et l'extrémité de la tige 16 faisant saillie du boitier. Dans l'exemple représenté, le second bras se prolonge jusqu'à une entretoise solidaire du boitier. Cette entretoise est constituée ici par une vis 30 pourvue d'un écrou 32. La vis traverse l'extrémité du second bras du levier, de telle manière qu'au repos, le second bras du levier vienne en contact de l'écrou 32 sous l'effet du ressort 14. L'extrémité de la tige 16 agissant sur le clapet est également pourvue d'un écrou 26 permettant de régler la longueur utile de la tige 16.

Les compensateurs de freinage étant bien connus, leur fonctionnement ne sera pas repris ici. Dans l'exemple représenté, on sait qu'à une charge du véhicule correspond une force appliquée verticalement et dirigée vers le haut (sur la Figure) à l'extrémité 24 du levier qui tourne alors autour de son pivot 22 pour ouvrir plus ou moins le clapet de la valve.

Pour assurer le pré-réglage du compensateur avant son montage en chaine sur les véhicules automobiles, l'homme de l'art comprend qu'il suffit d'ajuster la position des deux écrous 32 et 26 pour déterminer de façon répétitive le même point de coupure de la valve et la même hauteur de l'extrémité 24 du levier par rapport au boitier en position de repos. Grâce à cette disposition, on évite tout ballotement du levier 20 lorsque le véhicule n'est pas chargé, tout en obtenant le point de fonctionnement désiré de la valve.

## Revendications

1. Compensateur de freinage asservi à la hauteur d'assiette d'un véhicule comportant une partie suspendue solidaire du chassis et une partie non-suspendue associée à un essieu, le dit compensateur comprenant une valve correctrice de la pression du liquide de frein comportant, dans un boitier (18) solidaire de l'une des dites parties du véhicule, un clapet commandant le passage du liquide de frein pouvant être actionné par une tige (16) faisant saillie du dit boitier (18), le dit clapet étant maintenu en position de repos au moyen d'un élément élastique précontraint (14), et un levier (20) dont un premier bras s'étend entre un pivot (22) solidaire de la même partie du véhicule que le dit boitier, et l'autre partie du véhicule, et dont un second bras s'étend entre le dit pivot (22) et l'extrémité de la dite tige faisant saillie du dit boitier, caractérisé en ce qu'il comporte des moyens pour régler séparément au repos, d'une part, la précontrainte exercée sur le dit moyen élastique (14) et, d'autre part, la hauteur de l'extrémité (24) du dit premier bras reliée à la dite autre partie du véhicule, par rapport à celle du dit boitier pour une hauteur déterminée de l'assiette du dit véhicule, ces moyens étant constitués d'une part par un écrou (26) équipant la dite tige (16) et permettant de modifier la longueur utile de celle-ci, et d'autre part, par une entretoise (30, 32) solidaire de la même partie du véhicule que le dit boitier (18), dont la longueur est réglable, interdisant toute modification de la hauteur de la dite extrémité (24) pour une hauteur d'assiette du véhicule supérieure à la dite hauteur déterminée.

2. Compensateur selon la revendication 1, caractérisé en ce que la dite entretoise (30, 32) est constituée par un ensemble vis-écrou dont la vis (30) traverse un des dits bras et l'écrou (32) interdit tout mouvement du dit levier (20) pour une hauteur d'assiette du véhicule supérieure à la dite hauteur déterminée.

## Patentansprüche

1. Lastabhängiges Bremsventil, das in Abhängigkeit von der Höhe des Unterbaus eines Fahrzeuges eingestellt ist, das einen fest mit dem Chassis verbundenen aufgehängten Teil sowie einen einer Radachse zugeordneten nicht aufgehängten Teil aufweist, mit einem Bremsflüssigkeitsdruck-Korrektur-Ventil, das.in einem fest mit einem der teile des Fahrzeuges verbundenen Gehäuse ein Ventilglied umfaßt, das den Durchfluß der Bremsflüssigkeit steuert und durch eine am Gehäuse (18) vorstehende Stange (16) betätigbar ist, wobei das Ventilglied mittels eines vorgespannten elastischen Elements (14) in der Ruhelage gehalten ist, und mit einem Hebel (20), der einen ersten Arm aufweist, der sich zwischen einer fest an demselben Teil des Fahrzeuges wie das Gehäuse angeordneten Schwenkachse (22) und dem anderen Teil des Fahrzeuges erstreckt, und einen zweiten Arm aufweist, der sich zwischen der Schwenkachse (22) und dem Ende der am Gehäuse vorspringenden Stange erstreckt, dadurch gekennzeichnet, daß es Mittel umfaßt, um im Ruhezustand getrennt einerseits die auf die elastischen Mittel (14) ausgeübte Vorspannung und andererseits die Höhe des Endes (24) des ersten, mit dem anderen Teil des Fahrzeuges verbundenen Armes bezüglich der des Gehäuses für eine vorgegebene Höhe des Fahrzeugunterbaus einzustellen, wobei diese Mittel einerseits durch eine der Stange (16) zugeordnete Mutter (26) zum Verändern der zweckmäßigen Länge der Stange und andererseits durch ein Abstandsstück (30, 32) gebildet sind, das fest mit demselben Teil des Fahrzeuges wie das Gehäuse (18) verbunden ist und dessen Länge einstellbar ist, wodurch jede Änderung der Höhe des Endes (24) für eine Höhe des Fahrzeugunterbaus, die oberhalb der vorgegebenen Höhe liegt, unterbunden ist.

2. Lastabhängiges Bremsventil nach Anspruch 1, dadurch gekennzeichnet, daß das Abstandsstück (30, 32) durch eine Schrauben-Mutter-Anordnung gebildet ist, deren Schraube (30) einen der Arme durchdringt und deren Mutter (32) jede Bewegung des Hebels (20) für eine Höhe des Fahrzeugunterbaus oberhalb der vorgegebenen Höhe unterbindet.

## Claims

1. Braking compensator governed by the height of seat of a vehicle possessing a suspended part fixed to the chassis and an unsuspended part associated with an axle, the said compensator comprising a valve for correcting the pressure of the brake fluid, having, in a housing (18) fixed to one of the said parts of the vehicle, a shutter controlling the passage of the brake fluid and capable of being actuated by a rod (16) projecting from the said housing (18), the said shutter being maintained in the best position by means of a prestressed elastic element (14), and a lever (20), a first arm of which extends between a pivot (22) fixed to the same part of the vehicle as the said housing and the other part of the vehicle and a second arm of which extends between the said pivot (22) and that end of the said rod projecting from the said housing, characterised in that it possesses means for adjusting separately, at rest, on the one hand the prestress exerted on the said elastic means (14) and on the other hand the height of that end (24) of the said first arm connected to the said other part of the vehicle, in relation to that of the said housing for a specific height of seat of the said vehicle, these means consisting, on the one hand, of a nut (26) equipping the said rod (16) and making it possible to change the effective length of the latter, and, on the other hand, of a spacer (30, 32) which is fixed to the same part of the vehicle as the said housing (18) and the length of which is adjustable, preventing any change in the height of the said end (24) for a height of seat of the vehicle greater than the said specific height.

2. Compensator according to Claim 1, characterised in that the said spacer (30, 32) consists of a screw/nut assembly, of which the screw (30) passes through one of the said arms and the nut (32) prevents any movement of the said lever (20) for a height of seat of the vehicle greater than the said specific height.